# EUROPEAN PATENT SPECIFICATION

(11) **EP 3 509 886 B1**
(45) Date of publication and mention of the grant of the patent: **07.07.2021**
(21) Application number: 17849194.0
(22) Date of filing: 11.08.2017
(51) Int. Cl.: B60K 15/035, B62D 33/07

(54) **AN ARRANGEMENT FOR MOUNTING A BOIL-OFF PIPE OF A LIQUEFIED GAS FUEL SYSTEM TO A VEHICLE**
ANORDNUNG ZUR MONTAGE EINES VERDAMPFUNGSROHRS EINES FLÜSSIGGASKRAFTSTOFFSYSTEMS AN EIN FAHRZEUG
AGENCEMENT POUR MONTER UN TUYAU D'ÉVAPORATION D'UN SYSTÈME DE COMBUSTIBLE GAZEUX LIQUÉFIÉ SUR UN VÉHICULE

(30) Priority: 09.09.2016 SE 1651207
(43) Date of publication of application: 17.07.2019
(73) Proprietor: Scania CV AB, 151 87 Södertälje (SE)
(72) Inventor: LINDEBERG, Jonas, SE-852 39 Sundsvall (SE); PASIC, Anel, 151 48 Södertälje (SE)
(74) Representative: Scania CV AB
(86) International application number: PCT/SE2017/050809
(87) International publication number: WO 2018/048334

(56) References cited:
- EP-A1- 0 174 396
- EP-A1- 1 785 339
- EP-A1- 1 785 339
- EP-A2- 0 212 008
- WO-A1-01/84035
- WO-A1-2014/098712
- DE-A1- 4 243 184
- SE-C2- 537 135
- US-A- 4 440 252
- US-A- 4 440 252

## Description

### TECHNICAL FIELD

The invention relates to an arrangement for mounting a boil-off pipe of a liquefied gas fuel system to a vehicle according to the preamble of claim 1. The invention also relates to a vehicle.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degree Celsius at 10 bar for LNG, requiring certain conduits for transporting the liquefied natural gas and a certain tank for housing the fuel. When the vehicle is standing still and the engine is not operating the pressure in the tank will increase due to temperature increase in the tank. Therefore the system for liquefied gas is provided with a relief valve which according to an embodiment is set to open at 16 bar for evacuating evaporated gas.

The fuel tank/tanks for liquefied gas systems are usually arranged along and in connection to the vehicle frame. The evaporated gas is configured to be evacuated via a so called boil-off pipe connected to the fuel tank. The gas needs to be evacuated at a certain height. The boil-off pipe is further not allowed to project laterally or upwardly from the vehicle. For trucks the boil-off pipe is therefore usually arranged behind the cab of the truck. For trucks having a tiltable cabs, i.e. cabs arranged to be tilted forwardly, the boil-off pipe is according to a variant arranged to be connected to a vertical member arranged in connection to and at a distance from the rear side of the cab to avoid influence from the tilting.

Such a solution, however, takes up space behind the cab which otherwise could be used for overhang or semi-trailer in order to optimize the length of the load carrying part of the vehicle.

An arrangement for mounting a boil-off pipe of a liquified gas fuel system to a vehicle is also shown in DE 42 43 184 A1.

### OBJECTS OF THE INVENTION

An object of the present invention is to provide an arrangement for mounting a boil-off pipe of a liquefied gas fuel system to a vehicle having a tiltable cab which facilitates optimizing the length of a load carrying part of the vehicle and a safe and efficient tilting of the cab.

### SUMMARY OF THE INVENTION

These and other objects, apparent from the following description, are achieved by an arrangement and a vehicle as set out in the appended independent claims. Preferred embodiments of the arrangement are defined in appended dependent claims.

Specifically an object of the invention is achieved by an arrangement for mounting a boil-off pipe of a liquefied gas fuel system to a vehicle, said vehicle having a tiltable cab. Said fuel system has a chassis-mounted liquefied gas fuel tank for providing fuel to the engine of the vehicle, wherein evaporated gas is arranged to be evacuated from said tank via said boil-off pipe at a certain tank pressure. Said boil-off pipe is arranged in connection to the rear side of the cab via a connection arrangement of said arrangement.

According to the arrangement said boil-off pipe is attached to the rear side of the cab, wherein said connection arrangement comprises a coupling configuration for connecting the tank with the boil-off pipe in a non-tilted position of the cab and disconnecting the tank from the boil-off pipe in connection to the cab being tilted. The coupling configuration in said non-tilted position of the cab is arranged to be connected to a cab tilting operation arrangement so as to prevent tilting of said cab.

By thus attaching the boil-off pipe to the rear side of the vehicle cab the length of a load carrying part of the vehicle arranged behind the cab may be optimized. By having a connection arrangement with a coupling configuration for connecting the tank with the boil-off pipe in a non-tilted position of the cab and disconnecting the tank from the boil-off pipe in connection to the cab being tilted a safe and efficient tilting of the cab is facilitated. By thus connecting the coupling configuration in said non-tilted position of the cab to a cab tilting operation arrangement so as to prevent tilting of said cab the risk of the cab being tilted without disconnecting the tank from the boil-off pipe is avoided, thus improving safety of the arrangement. With this coupling configuration in which the boil-off pipe is disconnected from the tank there is no connecting means between the boil-off pipe and the tank in the tilted position of the cab which facilitates working on the vehicle in a workshop when the cab is tilted.

According to an embodiment of the arrangement said cab tilting operation arrangement comprises a pump unit for hydraulically tilting said cab. Hydraulic tilting by means of a pump unit is an efficient way of tilting the cab.

According to an embodiment of the arrangement said cab tilting operation arrangement comprises a circuit connected to said coupling configuration, wherein said coupling configuration, in said non-tilted position of the cab, is arranged to provide a blocking state of said circuit for preventing tilting of said cab. By thus connecting a circuit to the coupling configuration and provide a blocking state for preventing tilting of said cab in the non-tilted position an efficient way of avoiding the risk of the cab being tilted without disconnecting the tank from the boil-off pipe is provided, thus improving safety of the arrangement.

According to an embodiment of the arrangement said coupling configuration is arranged to provide a non-blocking state of said circuit for allowing tilting of said cab when the boil-off pipe has been disconnected from said tank. Hereby safe and efficient tilting of the cab is facilitated only when the boil-off pipe has been disconnected from said tank.

According to an embodiment of the arrangement said circuit is a hydraulic circuit in which hydraulic fluid is arranged to be provided by means of said pump unit for said tilting. By thus utilizing the hydraulic circuit from which the pump unit is arranged to pump hydraulic fluid for tilting of the cab and connecting it to the coupling configuration and provide a blocking state of the circuit when the boil-off pipe is connected to the tank by means of the coupling configuration so that tipping is not possible any pump unit including a hydraulic pump unit may be used. Hereby no extra sensors or other connections are required.

According to an embodiment of the arrangement said circuit is an electric circuit for operating said pump unit. Hereby efficient prevention of cab-tipping is obtained. Hereby disconnection of the boil-off pipe from the tank may be obtained in an easy and efficient way not requiring any manual valve control of hydraulic fluid flow. The pump unit is here an electric pump unit.

According to an embodiment of the arrangement said circuit is an optic circuit arranged for providing operation of said pump unit. Hereby disconnection of the boil-off pipe from the tank may be obtained in an easy and efficient way not requiring any manual valve control of hydraulic fluid flow. The pump unit is here an electric pump unit.

According to an embodiment of the arrangement said boil-off pipe is connected to said tank via a flexible hose. By thus connecting the boil-off pipe to the tank via a flexible hose movements of the cab relative to the vehicle chassis may be absorbed in the non-tilted position of the cab. The flexible hose thus has a length and flexibility to overcome certain movements of the cab relative to the chassis during drive of the vehicle with the cab in the non-tilted, i.e. upright position. A first part of the flexible hose is connected to the tank and a second part of the flexible hose is connected to the boil-off pipe. The coupling configuration for connecting the tank with the boil-off pipe comprises a first coupling unit connected to the tank and a second coupling unit connected to the boil-off pipe. In the non-tilted positon of the cab the first coupling unit and the second coupling unit are coupled to each other and in the tilted position of the cab the first coupling unit and the second coupling unit are de-coupled from each other. The first coupling unit is connected to the tank via said first hose part. The second coupling unit is connected to the boil-off pipe via said second hose part.

Specifically an object of the invention is achieved by a connection arrangement assembly comprising a chassis-mounted liquefied gas fuel tank, a cab-mounted boil-off pipe and a connection arrangement as set out herein, wherein said connection arrangement is arranged to operatively connect the gas fuel tank with the cab-mounted boil-off pipe when the cab is in a non-tilted position.

Specifically an object of the invention is achieved by a vehicle comprising an arrangement as set out herein.

Specifically an object of the invention is achieved by a vehicle comprising a connection arrangement assembly as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle with a tiltable cab according to the present invention;
Fig. 2 schematically illustrates a side view of the vehicle in fig. 1 with an arrangement for mounting a boil-off pipe of a liquefied gas fuel system according to an embodiment of the present invention;
Fig. 3a schematically illustrates a side view of an arrangement for mounting a boil-off pipe of a liquefied gas fuel system with a coupling configuration connected to a cab tilting operation arrangement for preventing cab tilting according to an embodiment of the present invention;
Fig. 3b schematically illustrates partly cut-out perspective view of the coupling configuration in fig. 3a;
Fig. 3c schematically illustrates perspective view of the coupling configuration in fig. 3a;
Fig. 4 schematically illustrates a side view of the vehicle in fig. 1 with an arrangement for mounting a boil-off pipe of a liquefied gas fuel system according to an embodiment of the present invention;
Fig. 5 schematically illustrates a side view of the vehicle in fig. 1 with an arrangement for mounting a boil-off pipe of a liquefied gas fuel system according to an embodiment of the present invention;

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

Hereinafter the term "flexible hose" refers to hoses configured to transport fluid for a liquefied gas fuel system, said hose being bendable to a certain degree and having a certain flexibility so as to facilitate taking up relative movements of a vehicle cab relative to a liquefied gas fuel tank.

Hereinafter the term "boil-off pipe" refers to a pipe, preferably a rigid pipe, configured to evacuate evaporated gas from a liquefied gas fuel tank of a liquefied gas fuel system. The pipe is according to an embodiment made of stainless steel. The boil-off pipe could alternatively be flexible such as a flexible hose.

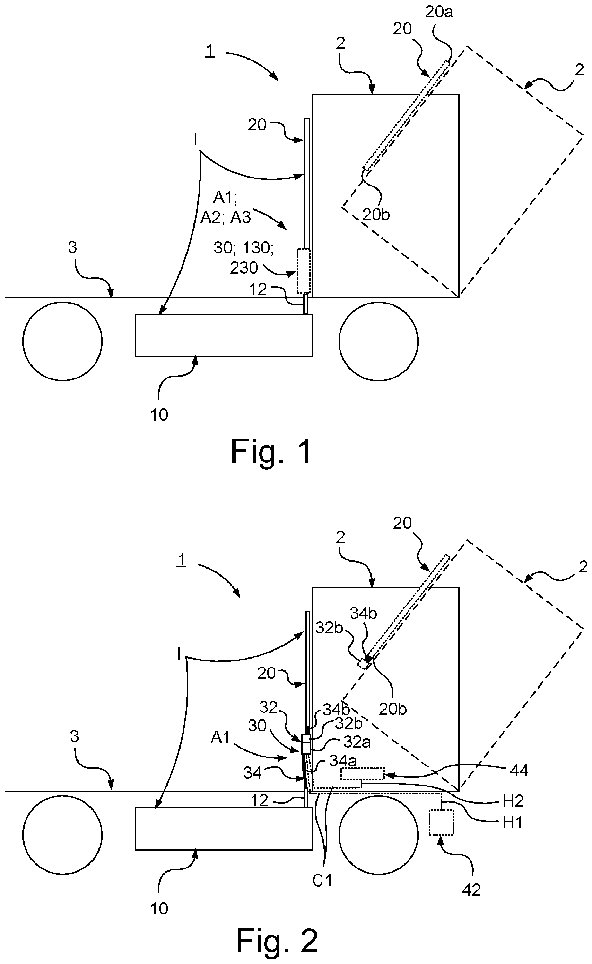

Fig. 1 schematically illustrates a side view of a vehicle 1 according to the present invention. The vehicle 1 has a tiltable vehicle cab 2. The vehicle 1 has a vehicle chassis 3. The cab 2 is tiltable relative to the vehicle chassis 3. The exemplified vehicle 1 is a heavy vehicle in the shape of a truck. The vehicle 1 is fuelled by means of a liquefied gas fuel system for operating the engine of the vehicle. The vehicle 1 may be any suitable truck configured to be arranged with a load carrying part behind the cab 2. Such a vehicle may be a truck arranged to carry an overhang behind the cab 2 or a semi-trailer truck comprising a towing truck and a semi-trailer coupled to the towing truck behind the cab 2 via a fifth wheel.

The cab 2 is tiltable between a non-tilted position in which the cab is upright and the vehicle may be driven and a tilted position, illustrated in fig. 1 with dashed lines. In the non-tilted position, the cab 2 is locked by means of cab locking members, not shown. The cab 2 may be tilted in any suitable way by any tiltable means. The cab 2 is according to an embodiment tiltable by means of a, in fig. 1 not shown, cab tilting operation arrangement comprising a pump unit for hydraulically tilting the cab 2. In order to tilt the cab 2, the pump unit is arranged to pump hydraulic fluid in a hydraulic conduits such that the locking members are unlocked. When the locking members are unlocked, the hydraulic fluid is then arranged to be pumped to hydraulic piston units providing a tilting operation for tilting the cab 2 to the tilted position.

Different variants of cab tilting operation arrangements are illustrated in connection to the different embodiments illustrated in fig. 2, 3a-c, 4 and 5.

The vehicle thus comprises a liquefied gas fuel system I. Said liquefied gas fuel system I comprises a chassis-mounted liquefied gas fuel tank 10 for providing fuel to the engine of the vehicle 1. Said liquefied gas fuel system I comprises a boil-off pipe 20 through which evaporated gas from the tank 10 is configured to be evacuated at a certain tank pressure. The boil-off pipe 20 is configured to be connected to the fuel tank 10. The system for liquefied gas is provided with a relief valve, not shown, which is set to open at said certain pressure, said pressure according to an embodiment being 16 bar, for evacuating evaporated gas from the tank 10 via the boil-off pipe 20. Said pressure may depend on the size of the tank.

The vehicle 1 illustrated in fig. 1 is a simplified illustration. The vehicle chassis of the vehicle 1 normally comprises a vehicle frame comprising a left longitudinal vehicle beam and a right longitudinal vehicle beam, not shown. The liquefied gas fuel tank 10 is arranged in connection to the vehicle frame. The liquefied gas fuel tank 10 may according to an embodiment comprise a left liquefied gas fuel tank part arranged in connection to a left longitudinal vehicle beam and a right liquefied gas fuel tank part arranged in connection to the right longitudinal beam of the chassis of the vehicle 1.

The vehicle comprises an arrangement A1, A2, A3 for mounting the boil-off pipe 20 of said liquefied gas fuel system I to the vehicle. The arrangement A1, A2, A3 for mounting the boil-off pipe 20 to the vehicle 1 comprises a connection arrangement 30; 130; 230. The boil-off pipe 20 is configured to be connected to the fuel tank 10 via said connection arrangement 30; 130; 230.

The connection arrangement 30; 130; 230 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said connection arrangement 30; 130; 230.

The connection arrangement 30; 130; 230 comprises a coupling configuration for connecting the tank 10 with the boil-off pipe 20 in a non-tilted position of the cab and disconnecting the tank 10 from the boil-off pipe 20 in connection to the cab 2 being tilted. The coupling configuration in said non-tilted position of the cab is connected to a cab tilting operation arrangement so as to prevent tilting of said cab. The cab tilting operation arrangement comprises a circuit connected to said coupling configuration, wherein said coupling configuration, in said non-tilted position of the cab, is arranged to provide a blocking state of said circuit for preventing tilting of said cab. Said coupling configuration is arranged to provide a non-blocking state of said circuit for allowing tilting of said cab when the boil-off pipe has been disconnected from said tank.

Different variants of said coupling configuration and cab tilting operation arrangement are illustrated in connection to the different embodiments illustrated in fig. 2, 3a-c, 4 and 5 described below.

Fig. 2 schematically illustrates a side view of the vehicle in fig. 1 with an arrangement A1 for mounting a boil-off pipe 20 of a liquefied gas fuel system I according to an embodiment of the present invention.

The arrangement A1 for mounting the boil-off pipe 20 to the vehicle 1 comprises according to this embodiment a connection arrangement 30. The connection arrangement 30 comprises a coupling configuration 32 for connecting the tank 10 with the boil-off pipe 20 in a non-tilted position of the cab and disconnecting the tank 10 from the boil-off pipe 20 in connection to the cab 2 being tilted.

Said boil-off pipe 20 is connected to the tank 10 via flexible hose 34. The connection arrangement 30 comprises according to an embodiment the flexible hose connected to the tank 10. The flexible hose 34 is connected to the tank 10 via said pipe 12. The flexible hose 34 is arranged to be connected to the boil-off pipe 20 via said coupling configuration in said non-tilted position of the cab 2. The flexible hose 34 comprises a first hose part 34a connected to the tank 10 via said pipe 12 and a second hose part 34b connected to said boil-off pipe 20.

The coupling configuration 32 for connecting the tank 10 with the boil-off pipe 20 comprises a first coupling unit 32a connected to the tank 10 and a second coupling unit 32b connected to the boil-off pipe. In the non-tilted positon of the cab 2 the first coupling unit 32a and the second coupling unit 32b are coupled to each other and in the tilted position of the cab 2 the first coupling unit 32a and the second coupling unit 32b are de-coupled from each other.

The first coupling unit 32a is connected to the tank 10 via said first hose part 34a. The second coupling unit 32b is connected to the boil-off pipe 20 via said second hose part 32b.

The flexible hose 34 is configured to absorb movements of the cab 2 relative to the vehicle chassis 3 in the non-tilted position of the cab 2. The flexible hose 34 thus has a length and flexibility to overcome certain movements of the cab 2 relative to the chassis 3 during drive of the vehicle with the cab 2 in the non-tilted, i.e. upright position.

The coupling configuration 32 in said non-tilted position of the cab 2 is connected to a cab tilting operation arrangement 40 so as to prevent tilting of said cab 2. The vehicle thus comprises said cab tilting operation arrangement 40. According to an embodiment the arrangement for mounting the boil-off pipe 20 to the vehicle 1 comprises said cab tilting operation arrangement 40.

The cab 2 is tiltable by means of said cab tilting operation arrangement 40. The cab tilting operation arrangement 40 comprises a pump unit 42 for hydraulically tilting the cab 2. The pump unit 42 is according to this embodiment a hydraulic pump unit 42.

The cab tilting operation arrangement 40 comprises a circuit C1 connected to said coupling configuration, wherein said coupling configuration, in said non-tilted position of the cab 2, is arranged to provide a blocking state of said circuit C1 for preventing tilting of said cab 2.

The cab tilting operation arrangement 40 comprises at least one hydraulic piston unit 44 arranged to tilt the cab 2 during tilting operation. The pump unit 42 is hydraulically connected to the piston unit 44. In order to tilt the cab 2, the pump unit 42 is arranged to pump hydraulic fluid such that not shown locking members for locking the cab in the non-tilted position are unlocked, and, when the locking members are unlocked, providing the hydraulic fluid to said at least one hydraulic piston unit 44 for providing a tilting operation for tilting the cab 2 to the tilted position.

The circuit C1 is a hydraulic circuit in which hydraulic fluid is arranged to be provided by means of said pump unit 42 for tilting the cab. The circuit C1 comprises a first hydraulic line H1 for hydraulic fluid connected between the pump unit 42 and the first coupling unit 32a of the coupling configuration 32 and a second hydraulic line H2 connected between the first coupling unit 32a of the coupling configuration 32 and the hydraulic piston unit 44.

Said coupling configuration 32, in said non-tilted position of the cab 2, is arranged to provide a blocking state of said circuit C1 for preventing hydraulic fluid to flow through said circuit C1 to said hydraulic piston unit 44 for preventing tilting of said cab 2. Thus, the first coupling unit 32a and the second coupling unit 32b when coupled together in said non-tilted position of the cab are arranged to block hydraulic fluid from the first line H1 to the second line H2.

Said coupling configuration 32, when said first coupling unit 32a is decoupled from said second coupling unit 32b, is arranged to provide a non-blocking state of said circuit C1 for allowing hydraulic fluid to flow through said circuit C1 to said hydraulic piston unit 44 for allowing tilting of said cab 2. Thus, the first coupling unit 32a and the second coupling unit 32b when de-coupled from each other are arranged to allow hydraulic fluid from the first line H1 to the second line H2 so that tilting of the cab 2 is allowed. According to an embodiment the non-blocking of said circuit C1 comprises, in addition to detaching the first coupling unit 32a from the second coupling unit 32b, opening a valve member arranged to block said circuit. This is according to an embodiment arranged to be performed manually.

The vehicle in fig. 2 comprises a connection arrangement assembly 10, 20, 30 comprising said chassis-mounted liquefied gas fuel tank 10, said cab-mounted boil-off pipe 20 and said connection arrangement 30, wherein said connection arrangement 30 is arranged to operatively connect the gas fuel tank 10 with the cab-mounted boil-off pipe 20 when the cab 2 is in the non-tilted position. Thus, said chassis-mounted liquefied gas fuel tank 10, said cab-mounted boil-off pipe 20 and said connection arrangement 30 provides a connection arrangement assembly 10, 20, 30, wherein said connection arrangement 30 is arranged to operatively connect the gas fuel tank 10 with the cab-mounted boil-off pipe 20 when the cab 2 is in the non-tilted position.

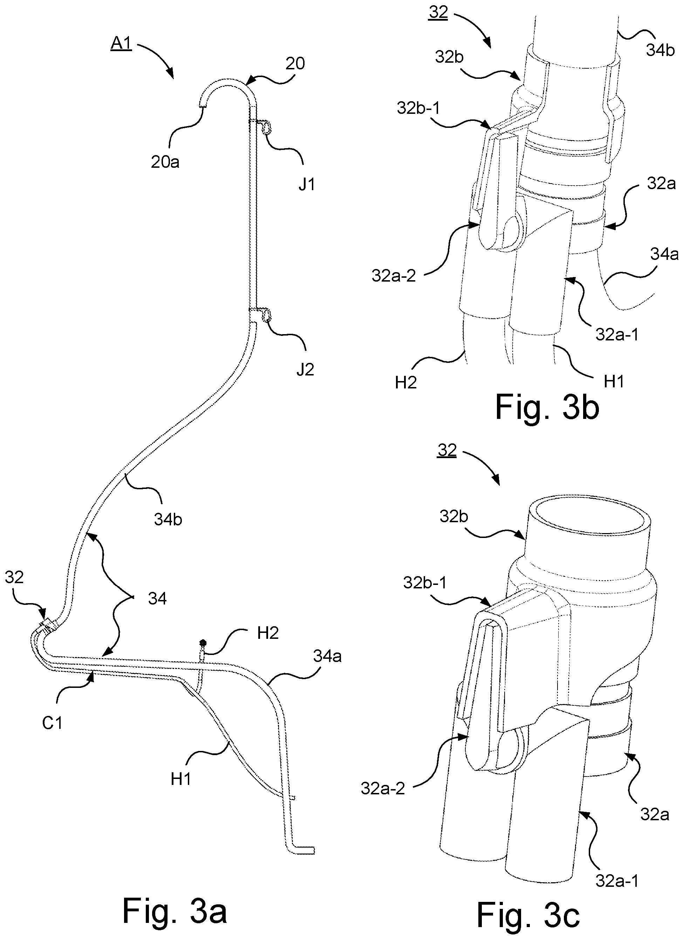

Fig. 3a-c described below illustrate a specific embodiment of the coupling configuration 32 and cab tilting arrangement 40 of the arrangement A1.

Fig. 3a schematically illustrates a side view of the arrangement A1 for mounting the boil-off pipe 20 of the liquefied gas fuel system with the coupling configuration 32 connected to the hydraulic circuit C1 of the cab tilting operation arrangement for preventing cab tilting according to an embodiment of the present invention.

The arrangement A1 comprising the boil-off pipe 20, the coupling configuration 32 and the flexible hose 34 is viewed in the longitudinal direction of the not shown vehicle towards the back of the cab of the vehicle.

The arrangement A1 comprises fastening members J1, J2 for attaching the boil-off pipe 20 to the back of the cab. The fastening members J1, J2 may be any suitable fastening members for attaching said boil-off pipe 20 to the back of the cab providing any suitable joint.

The upper portion of the boil-off pipe 20 has a curved shape in connection to the upper end 20a of the pipe 20.

The coupling configuration 32 is connected between the first hose part 34a and the second hose part 34b of the flexible hose 34.

Fig. 3b schematically illustrates partly cut-out perspective view of the coupling configuration in fig. 3a and fig. 3c schematically illustrates perspective view of the coupling configuration in fig. 3a. The coupling configuration 32 is in the coupled positon in which the first coupling unit 32a is coupled to the second coupling unit 32b.

The first coupling unit 32a of the coupling configuration 32 comprises a valve member 32a-1, 32a-2 arranged to provide a blocking state of said circuit C1 for preventing hydraulic fluid to flow through said circuit C1, i.e. from the first hydraulic line H1 via the coupling configuration and to the second hydraulic line H2 for preventing tilting of said cab.

The valve member 32a-1, 32a-2 is arranged to provide a non-blocking state of said circuit C1 for allowing hydraulic fluid to flow through said circuit C1, i.e. from the first hydraulic line H1 via the coupling configuration and to the second hydraulic line H2 for allowing tilting of said cab.

Said valve member comprises a U-shaped conduit member 32a-1 having a first opening to which the first hydraulic line H1 is arranged to be connected and a second opening to which the second hydraulic line H2 is arranged to be connected. The U-shaped conduit member 32a-1 provides a blockable passage.

Said valve member comprises a pivotable actuator arm member 32a-2 connected to said U-shaped conduit member 32a-1. Said pivotable actuator arm member 32a-2 is in a first position arranged to provide the blocking state by providing a blocking member such as a ball for blocking the passage of the U-shaped conduit member 32a-1. Said pivotable actuator arm member 32a-2 is in a second position arranged to provide the non-blocking state by removing the blocking member such that the passage of the U-shaped conduit member 32a-1 allows hydraulic fluid to flow from the first line H1 to the second line H2.

The pivotable actuator arm member 32a-2 is in the first position providing the blocking state arranged to be directed essentially vertically upward and in the second position providing the non-blocking state essentially horizontally.

The second coupling unit 32b of the coupling configuration 32 comprises a receiving member 32b-1 for receiving said pivotable actuator arm member 32a-2 when the first coupling unit 32a and the second coupling unit 32b are coupled. The receiving member 32b-1 has a U-shape with the opening facing down so as to receive the vertically upwardly directed actuator arm 32a-2 for facilitating coupling of the first coupling unit 32a and the second coupling unit 32b. If the actuator arm 32a-2 is in the second horizontal position providing the non-blocking state coupling of the first coupling unit 32a and the second coupling unit 32b is not possible.

Thus, in order to couple the first coupling unit 32a and the second coupling unit 32b and thus connect the boil-off pipe 20 with the tank the 32a-2 is in the actuator arm 32a-2 needs to be in the first position providing the blocking state. Hereby the cab cannot be brought into the locked non-tilted position if the actuator arm 32a-2 is not in the first position providing the blocking state and thus there is no risk of the cab being tilted when the boil-off pipe is connected to the tank in the non-tilted position of the cab.

The valve member 32a-1, 32a-2 may be denoted a so called Ballofix valve.

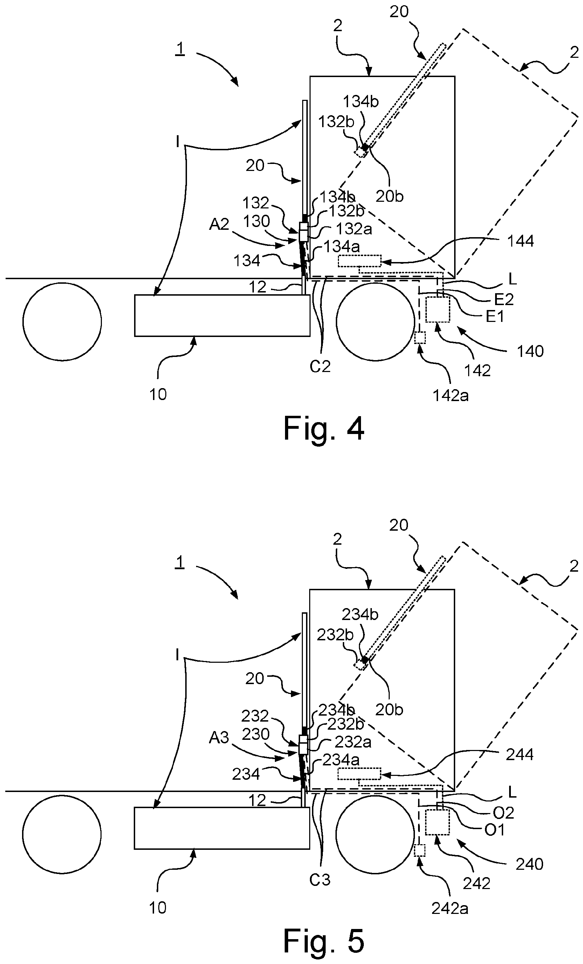

Fig. 4 schematically illustrates a side view of the vehicle in fig. 1 with an arrangement A2 for mounting the boil-off pipe 20 of the liquefied gas fuel system I according to an embodiment of the present invention.

The arrangement A2 for mounting the boil-off pipe 20 to the vehicle 1 comprises according to this embodiment a connection arrangement 130. The connection arrangement 130 comprises a coupling configuration 132 for connecting the tank 10 with the boil-off pipe 20 in a non-tilted position of the cab and disconnecting the tank 10 from the boil-off pipe 20 in connection to the cab 2 being tilted.

Said boil-off pipe 20 is connected to the tank 10 via flexible hose 134. The connection arrangement 130 comprises according to an embodiment the flexible hose connected to the tank 10. The flexible hose 134 is connected to the tank 10 via said pipe 12. The flexible hose 134 is arranged to be connected to the boil-off pipe 20 via said coupling configuration in said non-tilted position of the cab 2. The flexible hose 134 comprises a first hose part 134a connected to the tank 10 via said pipe 12 and a second hose part 134b connected to said boil-off pipe 20.

The coupling configuration 132 for connecting the tank 10 with the boil-off pipe 20 comprises a first coupling unit 132a connected to the tank 10 and a second coupling unit 132b connected to the boil-off pipe. In the non-tilted positon of the cab 2 the first coupling unit 132a and the second coupling unit 132b are coupled to each other and in the tilted position of the cab 2 the first coupling unit 132a and the second coupling unit 132b are de-coupled from each other.

The first coupling unit 132a is connected to the tank 10 via said first hose part 134a. The second coupling unit 132b is connected to the boil-off pipe 20 via said second hose part 132b.

The flexible hose 134 is configured to absorb movements of the cab 2 relative to the vehicle chassis 3 in the non-tilted position of the cab 2. The flexible hose 134 thus has a length and flexibility to overcome certain movements of the cab 2 relative to the chassis 3 during drive of the vehicle with the cab 2 in the non-tilted, i.e. upright position.

The coupling configuration 132 in said non-tilted position of the cab 2 is connected to a cab tilting operation arrangement 140 so as to prevent tilting of said cab 2. The vehicle thus comprises said cab tilting operation arrangement 140. According to an embodiment the arrangement A2 for mounting the boil-off pipe 20 to the vehicle 1 comprises said cab tilting operation arrangement 140.

The cab 2 is tiltable by means of said cab tilting operation arrangement 140. The cab tilting operation arrangement 140 comprises a pump unit 142 for hydraulically tilting the cab 2. The pump unit 142 is according to this embodiment an electric pump unit 142. The cab tilting operation arrangement 140 comprises a pump activation member 140a for activating operation of the pump unit 140. The pump activation member 140a may comprise one or more actuators for controlling the operation of the pump which may be arranged in the vehicle 1, e.g. in the cab 2 in connection to an instrument panel, and/or at the pump unit 140 and/or as a separate external actuator.

The cab tilting operation arrangement 140 comprises a circuit C2 connected to said coupling configuration, wherein said coupling configuration, in said non-tilted position of the cab, is arranged to provide a blocking state of said circuit C2 for preventing tilting of said cab 2.

The cab tilting operation arrangement 140 comprises at least one hydraulic piston unit 144 arranged to tilt the cab 2 during tilting operation. The pump unit 142 is hydraulically connected to the piston unit 144 via a hydraulic line H. In order to tilt the cab 2, the pump unit 142 is arranged to pump hydraulic fluid such that not shown locking members for locking the cab in the non-tilted position are unlocked, and, when the locking members are unlocked, providing the hydraulic fluid to said at least one hydraulic piston unit 144 for providing a tilting operation for tilting the cab 2 to the tilted position.

The circuit C2 is an electric circuit for operating said pump unit 142 for tilting the cab. The circuit C2 comprises a first electric line E1 connected between the pump activation member 142a and the first coupling unit 132a of the coupling configuration 132 and a second electric line E2 connected between the first coupling unit 132a of the coupling configuration 132 and the pump unit 142.

Said coupling configuration 132, in said non-tilted position of the cab 2, is arranged to provide a blocking state of said electric circuit C2 for preventing electric signal through said circuit C2 to said pump unit 142 for preventing activation of the pump unit so that the pump unit 142, despite an activation signal from said pump activation member 142a, will not be put in operation for tilting of said cab2. Thus, the first coupling unit 132a and the second coupling unit 132b when coupled together in said non-tilted position of the cab are arranged to block, i.e. short-circuit, the first line L1 from the second line L2 so that the pump unit will not be activated if an activation command is provided from the pump activation member 142a.

By using an electric pump unit and an electric circuit C2 connected to the coupling configuration 132 no opening and closing of a valve member with a an actuator arm member as used in the embodiment described with reference to fig. 2, 3a-c is here required.

Said coupling configuration 132, when said first coupling unit 132a is decoupled from said second coupling unit 132b, is arranged to provide a non-blocking state of said electric circuit C2 for allowing an electric signal through said circuit C2 to said pump unit 142 for allowing tilting of said cab 2. Thus, the firsts coupling unit 132a and the second coupling unit 132b when decoupled from each other are arranged to provide electric contact between the first line E1 and the second line E2 so that the pump unit will be activated if an activation command is provided from the pump activation member 142a.

According to an alternative embodiment the cab tilting operation arrangement 140 could instead comprises an electric circuit connected to the coupling configuration 132, wherein said coupling configuration, in said non-tilted position of the cab, is arranged to provide a non-blocking state of said circuit for preventing tilting of said cab. Thus, the circuit would then, when not blocked, i.e. being a closed circuit, provide an electric signal to the electric pump unit 140 when it is not possible to operate the pump unit for tilting the cab 2.

The vehicle in fig. 4 comprises a connection arrangement assembly 10, 20, 130 comprising said chassis-mounted liquefied gas fuel tank 10, said cab-mounted boil-off pipe 20 and said connection arrangement 130, wherein said connection arrangement 130 is arranged to operatively connect the gas fuel tank 10 with the cab-mounted boil-off pipe 20 when the cab 2 is in the non-tilted position. Thus, said chassis-mounted liquefied gas fuel tank 10, said cab-mounted boil-off pipe 20 and said connection arrangement 130 provides a connection arrangement assembly 10, 20, 130, wherein said connection arrangement 130 is arranged to operatively connect the gas fuel tank 10 with the cab-mounted boil-off pipe 20 when the cab 2 is in the non-tilted position.

Fig. 5 schematically illustrates a side view of the vehicle in fig. 1 with an arrangement A3 for mounting the boil-off pipe 20 of the liquefied gas fuel system I according to an embodiment of the present invention.

The arrangement A3 for mounting the boil-off pipe 20 to the vehicle 1 comprises according to this embodiment a connection arrangement 230. The connection arrangement 230 comprises a coupling configuration 232 for connecting the tank 10 with the boil-off pipe 20 in a non-tilted position of the cab and disconnecting the tank 10 from the boil-off pipe 20 in connection to the cab 2 being tilted.

Said boil-off pipe 20 is connected to the tank 10 via flexible hose 234. The connection arrangement 230 comprises according to an embodiment the flexible hose connected to the tank 10. The flexible hose 234 is connected to the tank 10 via said pipe 12. The flexible hose 234 is arranged to be connected to the boil-off pipe 20 via said coupling configuration in said non-tilted position of the cab 2. The flexible hose 234 comprises a first hose part 234a connected to the tank 10 via said pipe 12 and a second hose part 234b connected to said boil-off pipe 20.

The coupling configuration 232 for connecting the tank 10 with the boil-off pipe 20 comprises a first coupling unit 232a connected to the tank 10 and a second coupling unit 232b connected to the boil-off pipe. In the non-tilted positon of the cab 2 the first coupling unit 232a and the second coupling unit 232b are coupled to each other and in the tilted position of the cab 2 the first coupling unit 232a and the second coupling unit 232b are de-coupled from each other.

The first coupling unit 232a is connected to the tank 10 via said first hose part 234a. The second coupling unit 232b is connected to the boil-off pipe 20 via said second hose part 232b.

The flexible hose 234 is configured to absorb movements of the cab 2 relative to the vehicle chassis 3 in the non-tilted position of the cab 2. The flexible hose 234 thus has a length and flexibility to overcome certain movements of the cab 2 relative to the chassis 3 during drive of the vehicle with the cab 2 in the non-tilted, i.e. upright position.

The coupling configuration 232 in said non-tilted position of the cab 2 is connected to a cab tilting operation arrangement 240 so as to prevent tilting of said cab 2. The vehicle thus comprises said cab tilting operation arrangement 240. According to an embodiment the arrangement A3 for mounting the boil-off pipe 20 to the vehicle 1 comprises said cab tilting operation arrangement 240.

The cab 2 is tiltable by means of said cab tilting operation arrangement 240. The cab tilting operation arrangement 240 comprises a pump unit 242 for hydraulically tilting the cab 2. The pump unit 242 is according to this embodiment an electric pump unit 242. The cab tilting operation arrangement 240 comprises a pump activation member 240a for activating operation of the pump unit 240. The pump activation member 240a may comprise one or more actuators for controlling the operation of the pump which may be arranged in the vehicle 1, e.g. in the cab 2 in connection to an instrument panel, and/or at the pump unit 240 and/or as a separate external actuator.

The cab tilting operation arrangement 240 comprises a circuit C3 connected to said coupling configuration, wherein said coupling configuration, in said non-tilted position of the cab, is arranged to provide a blocking state of said circuit C3 for preventing tilting of said cab 2.

The cab tilting operation arrangement 240 comprises at least one hydraulic piston unit 244 arranged to tilt the cab 2 during tilting operation. The pump unit 242 is hydraulically connected to the piston unit 244 via a hydraulic line H. In order to tilt the cab 2, the pump unit 242 is arranged to pump hydraulic fluid such that not shown locking members for locking the cab in the non-tilted position are unlocked, and, when the locking members are unlocked, providing the hydraulic fluid to said at least one hydraulic piston unit 244 for providing a tilting operation for tilting the cab 2 to the tilted position.

The circuit C3 is an optic circuit for operating said pump unit 242 for tilting the cab. The circuit C3 comprises a first optic line O1 connected between the pump activation member 242a and the first coupling unit 232a of the coupling configuration 232 and a second optic line E2 connected between the first coupling unit 232a of the coupling configuration 232 and the pump unit 242. The optic line O1, O2 are fibre optic lines.

Said coupling configuration 232, in said non-tilted position of the cab 2, is arranged to provide a blocking state of said optic circuit C3 for preventing optic signal through said circuit C3 to said pump unit 242 for preventing activation of the pump unit so that the pump unit 242, despite an activation signal from said pump activation member 242a, will not be put in operation for tilting of said cab2. Thus, the first coupling unit 232a and the second coupling unit 232b when coupled together in said non-tilted position of the cab are arranged to block the first line O1 from the second line O2 so that the pump unit will not be activated if an activation command is provided from the pump activation member 242a.

By using an electric pump unit and an optic circuit O2 connected to the coupling configuration 232 no opening and closing of a valve member with a an actuator arm member as used in the embodiment described with reference to fig. 2, 3a-c is here required.

Said coupling configuration 232, when said first coupling unit 232a is decoupled from said second coupling unit 232b, is arranged to provide a non-blocking state of said optic circuit C3 for allowing an optic signal through said circuit C3 to said pump unit 242 for allowing tilting of said cab 2.

The vehicle in fig. 2 comprises a connection arrangement assembly 10, 20, 230 comprising said chassis-mounted liquefied gas fuel tank 10, said cab-mounted boil-off pipe 20 and said connection arrangement 230, wherein said connection arrangement 230 is arranged to operatively connect the gas fuel tank 10 with the cab-mounted boil-off pipe 20 when the cab 2 is in the non-tilted position. Thus, said chassis-mounted liquefied gas fuel tank 10, said cab-mounted boil-off pipe 20 and said connection arrangement 230 provides a connection arrangement assembly 10, 20, 230, wherein said connection arrangement 230 is arranged to operatively connect the gas fuel tank 10 with the cab-mounted boil-off pipe 20 when the cab 2 is in the non-tilted position. The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art in accordance with the scope of the invention as defined by the appended claims. The embodiments were chosen and described in order to best explain the principles of the invention and its practical applications, thereby enabling others skilled in the art to understand the invention for various embodiments and with the various modifications as are suited to the particular use contemplated.

## Claims

1. An arrangement (A1; A2; A3) for mounting a boil-off pipe (20) of a liquefied gas fuel system (I) to a vehicle (1), said vehicle having a tiltable cab (2), said fuel system having a chassis-mounted liquefied gas fuel tank (10) for providing fuel to the engine of the vehicle (1), wherein evaporated gas is arranged to be evacuated from said tank (10) via said boil-off pipe (20) at a certain tank pressure, said boil-off pipe (20) being arranged in connection to a rear side of the cab (2) via a connection arrangement (30; 130; 230) of said arrangement (A1; A2; A3), **characterized in that** said boil-off pipe (20) is attached to the rear side of the cab (2), wherein said connection arrangement (30; 130; 230) comprises a coupling configuration (32; 132; 232) for connecting the tank with the boil-off pipe (20) in a non-tilted position of the cab (2) and disconnecting the tank (10) from the boil-off pipe (20) in connection to the cab (2) being tilted, wherein the coupling configuration (32; 132; 232) in said non-tilted position of the cab (2) is arranged to be connected to a cab tilting operation arrangement (40; 140; 240) so as to prevent tilting of said cab (2).

2. An arrangement according to claim 1, wherein said cab tilting operation arrangement (40; 140; 240) comprises a pump unit (42; 142; 242) for hydraulically tilting said cab (2).

3. An arrangement according to claim 1 or 2, wherein said cab tilting operation arrangement (40; 140; 240) comprises a circuit (C1; C2; C3) connected to said coupling configuration, wherein said coupling configuration (32; 132; 232), in said non-tilted position of the cab (2), is arranged to provide a blocking state of said circuit (C1; C2; C3) for preventing tilting of said cab (2).

4. An arrangement according to claim 3, wherein said coupling configuration (32; 132; 232) is arranged to provide a non-blocking state of said circuit (C1; C2; C3) for allowing tilting of said cab (2) when the boil-off pipe (20) has been disconnected from said tank (10).

5. An arrangement according to claim 2 or 3, wherein said circuit (C1) is a hydraulic circuit in which hydraulic fluid is arranged to be provided by means of said pump unit (42) for said tilting.

6. An arrangement according to claim 2 or 3, wherein said circuit (C2) is an electric circuit for operating said pump unit (142).

7. An arrangement according to claim 2 or 3, wherein said circuit (C3) is an optic circuit arranged for providing operation of said pump unit (242.

8. An arrangement according to any of claims 2-6, wherein is said boil-off pipe (20) is connected to said tank via flexible hose (34).

9. A connection arrangement assembly (10, 20, 30; 130; 230) comprising a chassis-mounted liquefied gas fuel tank (10), a cab-mounted boil-off pipe (20) and a connection arrangement (30; 130; 230) according to any of claims 1-8, wherein said connection arrangement (30; 130; 230) is arranged to operatively connect the gas fuel tank (10) with the cab-mounted boil-off pipe (20) when the cab (2) is in a non-tilted position.

10. A vehicle (1) comprising an arrangement according to any of claims 1-8.

11. A vehicle (1) comprising a connection arrangement assembly (10, 20, 30; 130; 230) according to claim 9.

## Patentansprüche

1. Anordnung (A1; A2; A3) zur Montage eines Verdampfungsrohres (20) eines Flüssiggaskraftstoffsystems (I) an einem Fahrzeug (1), wobei das Fahrzeug ein kippbares Fahrerhaus (2) umfasst, wobei das Kraftstoffsystem einen am Fahrgestell montierten Flüssiggas-Kraftstofftank (10) zur Bereitstellung von Kraftstoff für den Motor des Fahrzeugs (1) aufweist, wobei verdampftes Gas dazu vorgesehen ist, aus dem Tank (10) über das Verdampfungsrohr (20) bei einem bestimmten Tankdruck aus dem Tank (10) abgeleitet zu werden, wobei das Verdampfungsrohr (20) in Verbindung mit einer Rückseite des Fahrerhauses (2) über eine Verbindungsanordnung (30; 130; 230) der Anordnung (41; A2; A3) angeordnet ist, **dadurch gekennzeichnet, dass** das Verdampfungsrohr (20) an der Rückseite des Fahrerhauses (2) angeordnet ist, wobei die Verbindungsanordnung (30; 130; 230) eine Kopplungsanordnung (32; 132; 232) zum Verbinden des Tanks mit dem Verdampfungsrohr (20) in einer nicht gekippten Position des Fahrerhauses (2) und zum Trennen des Tanks (10) von dem Verdampfungsrohr (20), wenn das Fahrerhaus (2) gekippt ist, umfasst, wobei die Kopplungsanordnung (32; 132; 232) in der nicht gekippten Position des Fahrerhauses (2) dazu eingerichtet ist, mit einer Fahrerhauskipp-Betätigungsanordnung (40; 140; 240) verbunden zu sein, um ein Kippen des Fahrerhauses (2) zu verhindern.

2. Anordnung nach Anspruch 1, wobei die Fahrerhauskipp-Betätigungsanordnung (40; 140; 240) eine Pumpeinheit (42; 142; 242) zum hydraulischen Kippen der Fahrerhauses (2) umfasst.

3. Anordnung nach Anspruch 1 oder 2, wobei die Fahrerhauskipp-Betätigungsanordnung (40; 140; 240) einen Kreis (C1; C2; C3) umfasst, der mit der Kopplungsanordnung verbunden ist, wobei die Kopplungsanordnung (32; 132; 232) in der nicht gekippten Position des Fahrerhauses (2) dazu eingerichtet ist, einen Blockierzustand des Kreises (C1; C2; C3) zum Verhindern eines Kippens des Fahrerhauses (2) bereitzustellen.

4. Anordnung nach Anspruch 3, wobei die Kopplungsanordnung (32; 132; 232) dazu eingerichtet ist, einen Nicht-Blockierzustand des Kreises (C1; C2; C3) zum Ermöglichen des Kippens des Fahrerhauses (2) bereitzustellen, wenn das Verdampfungsrohr (2) von dem Tank (10) getrennt wurde.

5. Anordnung nach Anspruch 2 oder 3, wobei der Kreis (C1) ein hydraulischer Kreis ist, in dem hydraulisches Fluid dazu eingerichtet ist, mittels der Pumpeinheit (42) für das Kippen bereitgestellt zu werden.

6. Anordnung nach Anspruch 2 oder 3, wobei der Kreis (C2) ein elektrischer Kreis ist zum Betreiben der Pumpeinheit (142).

7. Anordnung nach Anspruch 2 oder 3, wobei der Kreis (C3) ein optischer Kreis ist, der dazu eingerichtet ist, ein Betreiben der Pumpeinheit (242) bereitzustellen.

8. Anordnung nach einem der Ansprüche 2 bis 6, wobei das Verdampfungsrohr (20) mit dem Tank mittels eines flexiblen Schlauchs (34) verbunden ist.

9. Verbindungsanordnungsaufbau (10, 20, 30; 130; 230), umfassend einen am Fahrgestell montierten Flüssiggas-Kraftstofftank (10), ein am Fahrerhaus angeordnetes Verdampfungsrohr (20) und eine Verbindungsanordnung (30; 130; 230) nach einem der vorangehenden Ansprüche 1 bis 8, wobei die Verbindungsanordnung (30; 130; 230) dazu eingerichtet ist, den Gaskraftstofftank (10) mit dem am Fahrerhaus angeordneten Verdampfungsrohr (20) funktionsfähig zu verbinden, wenn sich das Fahrerhaus (2) in einer nicht-gekippten Position befindet.

10. Fahrzeug (1), umfassend eine Anordnung nach einem der Ansprüche 1 bis 8.

11. Fahrzeug (1), umfassend einen Verbindungsanordnungsaufbau (10, 20, 30; 130; 230) nach Anspruch 9.

## Revendications

1. Agencement (A1; A2 ; A3) destiné à monter une conduite d'évaporation (20) d'un système de carburant gazeux liquéfié (1) sur un véhicule (1), ledit véhicule ayant une cabine inclinable (2), ledit système de carburant ayant un réservoir de carburant gazeux liquéfié monté sur châssis (10) destiné à fournir du carburant au moteur du véhicule (1), dans lequel le gaz évaporé est agencé pour être évacué dudit réservoir (10) via ladite conduite d'évaporation (20) à une certaine pression de réservoir, ladite conduite d'évaporation (20) étant agencée en connexion à un côté arrière de la cabine (2) via un agencement de connexion (30 ; 130 ; 230) dudit agencement (A1; A2 ; A3), **caractérisé en ce que** ladite conduite d'évaporation (20) est fixée au côté arrière de la cabine (2), dans lequel ledit agencement de connexion (30 ; 130 ; 230) comprend une configuration de couplage (32 ; 132 ; 232) destinée à connecter le réservoir avec la conduite d'évaporation (20) dans une position non inclinée de la cabine (2) et à déconnecter le réservoir (10) de la conduite d'évaporation (20) en connexion à la cabine (2) qui est inclinée, dans lequel la configuration de couplage (32 ; 132 ; 232) dans ladite position non inclinée de la cabine (2) est agencée pour être connectée à un agencement de fonctionnement d'inclinaison de cabine (40 ; 140 ; 240) afin d'empêcher l'inclinaison de ladite cabine (2).

2. Agencement selon la revendication 1, dans lequel ledit agencement de fonctionnement d'inclinaison de cabine (40 ; 140 ; 240) comprend un groupe motopompe (42 ; 142 ; 242) pour l'inclinaison hydraulique de ladite cabine (2).

3. Agencement selon la revendication 1 ou 2, dans lequel ledit agencement de fonctionnement d'inclinaison de cabine (40 ; 140 ; 240) comprend un circuit (C1; C2 ; C3) connecté à ladite configuration de couplage, dans lequel ladite configuration de couplage (32 ; 132 ; 232), dans ladite position non inclinée de la cabine (2), est agencée pour fournir un état de blocage dudit circuit (C1; C2 ; C3) pour empêcher l'inclinaison de ladite cabine (2) .

4. Agencement selon la revendication 3, dans lequel ladite configuration de couplage (32 ; 132 ; 232) est agencée pour fournir un état de non blocage dudit circuit (C1; C2 ; C3) pour permettre l'inclinaison de ladite cabine (2) lorsque la conduite d'évaporation (20) a été déconnectée dudit réservoir (10).

5. Agencement selon la revendication 2 ou 3, dans lequel le circuit (C1) est un circuit hydraulique dans lequel un fluide hydraulique est agencé pour être fourni au moyen dudit groupe motopompe (42) pour ladite inclinaison.

6. Agencement selon la revendication 2 ou 3, dans lequel ledit circuit (C2) est un circuit électrique destiné à faire fonctionner ledit groupe motopompe (142).

7. Agencement selon la revendication 2 ou 3, dans lequel ledit circuit (C3) est un circuit optique agencé pour fournir le fonctionnement dudit groupe motopompe (242.

8. Agencement selon l'une quelconque des revendications 2 à 6, dans lequel ladite conduite d'évaporation (20) est connectée audit réservoir via un tuyau flexible (34).

9. Ensemble d'agencement de connexion (10, 20, 30 ; 130 ; 230) comprenant un réservoir de carburant gazeux liquéfié monté sur châssis (10), une conduite d'évaporation montée sur cabine (20) et un agencement de connexion (30 ; 130 ; 230) selon l'une quelconque des revendications 1 à 8, dans lequel ledit agencement de connexion (30 ; 130 ; 230) est agencé pour connecter de manière fonctionnelle le réservoir de carburant gazeux (10) avec la conduite d'évaporation montée sur cabine (20) lorsque la cabine (2) est en position non inclinée.

10. Véhicule (1) comprenant un agencement selon l'une quelconque des revendications 1 à 8.

11. Véhicule (1) comprenant un ensemble d'agencement de connexion (10, 20, 30 ; 130 ; 230) selon la revendication 9.
